# FASCICULE DE BREVET EUROPEEN

(11) **EP 3 537 026 B1**
(45) Date de publication et mention de la délivrance du brevet: **17.01.2024**
(21) Numéro de dépôt: 19161068.2
(22) Date de dépôt: 06.03.2019
(51) Int. Cl.: F17C 13/02, B01D 19/00, B04C 5/14

(54) **SYSTEME, DISPOSITIF ET PROCEDE DE REGULATION DE LA PRESSION D'UN RESERVOIR DE FLUIDE**
SYSTEM, VORRICHTUNG UND METHODE ZUR DRUCKREGULIERUNG IN EINEM FLUIDBEHÄLTER
SYSTEM, DEVICE AND METHOD FOR PRESSURE REGULATION IN A FLUID VESSEL

(30) Priorité: 06.03.2018 FR 1851930
(43) Date de publication de la demande: 11.09.2019
(73) Titulaire: L'AIR LIQUIDE, SOCIETE ANONYME POUR L'ETUDE ET L'EXPLOITATION DES PROCEDES GEORGES CLAUDE, 75007 Paris (FR); Centre National d'Études Spatiales, 75001 Paris (FR)
(72) Inventeur: FENDLER, Yoann, 38360 NOYAREY (FR); LEROY, Marc, 38430 MOIRANS (FR); LEGRAND, Benjamin, 91430 IGNY (FR); MAJ, Guillaume, 38410 SAINT MARTIN D'URIAGE (FR)
(74) Mandataire: Bandpay & Greuter

(56) Documents cités:
- EP-A1- 0 625 672
- FR-A1- 2 500 908
- US-A- 3 107 988
- US-A- 3 209 518
- US-A- 3 257 780
- US-A- 3 318 073
- US-A- 3 486 302
- US-B1- 9 395 048

## Description

### DOMAINE DE L'INVENTION

L'invention se rapporte au domaine des systèmes de régulation de la pression de réservoirs des fluides dans des environnements soumis à peu ou pas de gravité.

### ARRIERE-PLAN

La pression dans un réservoir qui contient un fluide liquéfié est généralement contrôlée à l'aide de régulateurs mesurant la pression dans le réservoir et agissant sur une vanne automatique lorsque la pression est trop importante dans le réservoir. La vanne est généralement disposée sur la partie haute du réservoir afin que seule la phase gazeuse du fluide soit expulsée ; la phase liquide du fluide est maintenue sur la partie basse du réservoir sous l'effet de la gravité, par exemple la gravité terrestre.

Dans des environnements où la gravité ou les effets de la gravité sont faibles ou quasi nuis, comme c'est par exemple le cas en orbite géostationnaire, les régulateurs de pression « terrestres » ne peuvent plus être utilisés car il n'est pas possible de savoir si l'ouverture prévue dans le réservoir pour évacuer la surpression sera en contact ou pas avec la phase liquide du fluide. En d'autres termes, il est difficile de savoir où la vapeur est située, et d'assurer un dégazage de vapeur pure. Si du liquide est rejeté, la baisse de pression résultante est moins efficace et du liquide est perdu de manière indésirable. Suivant la quantité de liquide rejetée, cela peut entraîner une baisse rédhibitoire du rendement du système.

La NASA (National Aeronautics and Space Administration) a développé un système nommé TVS (acronyme de l'anglais « Thermodynamic Vent System » pouvant être traduit par « Système de ventilation thermodynamique »). Ce système contrôle la pression en retirant de l'énergie et de la masse au fluide. Tout d'abord, du liquide pur est extrait à travers un LAD (acronyme de l'anglais « Liquid Acquisition Device » pouvant être traduit par « Dispositif d'acquisition de liquide ») qui est un système utilisant les forces capillaires pour collecter du liquide. Le liquide prélevé est ensuite détendu et par conséquent refroidi au travers d'un orifice Joule-Thompson. Une partie du liquide est vaporisée au cours de cette détente. Le mélange liquidevapeur (ou fluide) détendu passe ensuite dans un échangeur de chaleur, dans lequel il collecte la chaleur du liquide plus chaud (non détendu) restant dans le réservoir. Cela permet d'achever la vaporisation du fluide rejeté, tout en refroidissant le fluide restant dans le réservoir.

Un TVS peut être soit passif, soit actif, selon que l'échange avec le fluide du réservoir autour de l'échangeur de chaleur est réalisé en convection forcée (actif) ou naturelle (passif).

En convection naturelle, le coefficient d'échange côté externe de l'échangeur (fluide du réservoir) est très faible, particulièrement en gravité réduite. Il est alors nécessaire d'utiliser une large surface d'échange, ce qui se traduit par un échangeur de chaleur très volumineux et lourd. Dans un environnement où la gravité est quasinulle, cette solution n'est pas adaptée.

Dans un TVS actif, une pompe permet de forcer la convection dans le liquide du réservoir de manière à augmenter le coefficient d'échange et réduire la taille et la masse de l'échangeur. Le mouvement imposé à l'intérieur du réservoir par la pompe peut aussi être utilisé, sous forme de jet ou de spray, pour mélanger le fluide du réservoir et homogénéiser sa température (éviter les points chauds qui favorisent la montée en pression). Cependant, la pompe doit continuellement fonctionner, ce qui n'est pas adapté au domaine spatial ; notamment parce qu'il existe un risque d'usure de la pompe et que son remplacement est difficile. Par ailleurs, une utilisation continue de la pompe implique une consommation d'énergie électrique qui est une ressource comptée sur un véhicule spatial. Par ailleurs le rendement de la pompe nécessairement inférieur à 1 ainsi que les pertes de charge le long de l'écoulement du liquide pompé constituent des dissipations énergétiques qui sont in fine restituées au fluide stocké dans le réservoir, ce qui pénalise l'efficacité global du procédé de régulation de pression. Le document US3209518A divulgue un système de régulation de la pression d'un réservoir.

Dans ce contexte, il existe un besoin pour réguler de la pression d'un réservoir de fluide pouvant présenter des phases liquide et gazeuse lorsque la gravité et/ou la pesanteur est faible.

### RESUME DE L'INVENTION

On propose pour cela un système de régulation de la pression d'un réservoir de fluide, ainsi qu'un réservoir comprenant un tel système et un procédé de régulation de la pression d'un réservoir de fluide à l'aide de ce système, conformément aux revendications 1-12.

Le système comprend une chambre de séparation mécanique des phases liquide et gazeuse du fluide, la chambre de séparation étant un séparateur cyclonique, une première ouverture dans la chambre formant une entrée via laquelle le fluide est introduit du réservoir dans la chambre, une deuxième ouverture dans la chambre formant une première sortie permettant l'évacuation de la phase gazeuse de la chambre à l'extérieur du réservoir, une troisième ouverture dans la chambre formant une deuxième sortie via laquelle la phase liquide de la chambre est évacuée et réinjectée dans le réservoir, un organe de pompage de la phase liquide communiquant avec la deuxième sortie, une première vanne reliée à l'entrée en contrôlant une quantité de fluide introduit via l'entrée.

Un tel système améliore la régulation de la pression d'un réservoir de fluide présentant des phases liquide et gazeuse, par exemple un fluide liquéfié, lorsque la gravité est faible ou bien lorsque la pesanteur est faible - c'est-à-dire lorsque les effets de la gravité sont faibles. La gravité ou ses effets sont faibles lorsque l'effet de l'énergie potentielle (pgz) est bien inférieur à l'effet des forces capillaires (sigma/r), ce qui se traduit par un nombre de Bond qui est très inférieur à 1, le nombre de Bond exprimant le rapport entre les forces gravitationnelles et capillaires. Typiquement, les effets de la gravité sont faibles dans un système d'engin spatial ayant quitté la terre, par exemple en orbite autour de la terre ou encore hors orbite terrestre.

Notamment, le système selon l'invention comprend une chambre de séparation dans laquelle les phases liquide et gazeuse du fluide prélevé du réservoir sont séparées. La phase gazeuse peut être rejetée et la phase liquide du fluide est réinjectée dans le réservoir à l'aide d'un organe de pompage, par exemple une pompe. Ainsi, seul un gaz pur est évacué du réservoir, et ce indépendamment de la présence ou pas de liquide dans le prélèvement effectué dans le réservoir. L'invention permet une extraction efficace de la vapeur contenue dans le réservoir en évitant de devoir recourir à un drainage capillaire du liquide séparé. La présence de moyens de pompage permet également de réinjecter dans le réservoir le liquide extrait avec une vitesse relativement importante, ce qui permet d'assurer un brassage efficace favorisant l'homogénéisation thermique du fluide stocké. D'autres améliorations seront discutées avec la discussion d'exemples de l'invention.

Selon différents exemples, toute combinaison d'au moins l'une des caractéristiques suivantes peut être implémentée :
- l'organe de pompage est une pompe à piston comprenant au moins un piston dont le déplacement crée une compression dans un corps de pompe cylindrique en communication avec la deuxième sortie ;
- le corps de pompe comprend un fond inférieur qui possède une géométrie qui est complémentaire à la géométrie du piston, le fond inférieur comprenant une ou plusieurs ouvertures par lesquelles le liquide extrait est pompé hors du corps de pompe ;
- la chambre de séparation mécanique comprend au moins une section se rétrécissant, de préférence la section se rétrécissant a une surface conique et le sommet de la surface conique comprend la deuxième sortie qui est en contact avec le corps de pompe ;
- les surfaces internes de la section se rétrécissant et du corps de la pompe, forment un cône de révolution ;
- ledit au moins un piston de la pompe comprend une tige sur laquelle est placée une collerette ;
- la tige est reliée à un actionneur qui est situé en dehors de la chambre de séparation mécanique ;
- le piston comprend une partie frontale qui a une forme d'ogive ou une surface conique, la partie frontale pouvant pénétrer dans le corps de pompe sans créer une compression dans le corps de pompe ; une deuxième vanne reliée à la première sortie et contrôlant une quantité de la phase gazeuse du fluide évacué via la première sortie ;
- la première vanne et/ou la deuxième vanne sont des vannes du type tout ou rien ;
- un organe de régulation de contre-pression communiquant avec la première sortie et avec la deuxième vanne, ou avec la deuxième vanne uniquement ;
- un organe de détente isenthalpique du fluide destiné à être introduit dans la chambre ;
- le corps de pompe comprend un ou plusieurs pièges capillaires.

Le réservoir de fluide liquéfié comprend le système de régulation de la pression, dans lequel l'entrée et la deuxième sortie du système de pompe communiquent avec le réservoir.

Le procédé de régulation de la pression d'un réservoir de fluide liquéfié, le réservoir comprenant le système, comprend les étapes consistant à :
- déterminer que la pression du réservoir dépasse un seuil ;
- ouvrir la première vanne et la deuxième vanne ;
- déterminer que la phase liquide du fluide ayant été séparée dans la chambre de séparation doit être pompée ;
- fermer la deuxième vanne afin d'augmenter la pression dans la chambre de séparation ;
- fermer la première vanne ;
- actionner l'organe de pompage de la phase liquide.

### BREVE DESCRIPTION DES FIGURES

Différents modes de réalisation de l'invention vont maintenant être décrits, à titre d'exemples nullement limitatifs, en se référant aux dessins annexés dans lesquels :
- La FIG. 1 montre un exemple schématique d'un réservoir comprenant le système ;
- Les FIGs. 2, 3 et 11 montrent des exemples schématiques d'un système ;
- Les FIGs. 4 à 9 montrent un exemple schématique du fonctionnement du système ;
- La FIG. 10 est un block diagramme d'un procédé de régulation de la pression.

### DESCRIPTION DETAILLEE

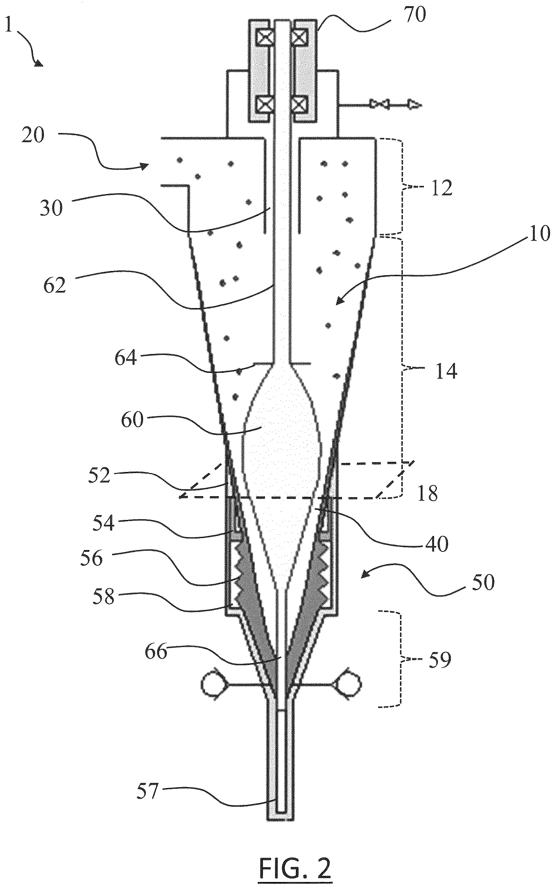

La FIG. 2 montre un exemple de système 1 de régulation de la pression d'un réservoir de fluide. La régulation de la pression comprend notamment d'abaisser la pression du réservoir en expulsant de la vapeur qui s'est créée dans le réservoir. Le terme vapeur désigne la phase gazeuse du fluide contenu dans le réservoir. La vapeur est notamment créée en réaction à l'échauffement du réservoir, par exemple sous l'action du rayonnement solaire. Le fluide contenu dans le réservoir peut être de toute nature. Notamment, le fluide peut être un fluide liquéfié, par exemple un fluide liquéfié utilisé dans l'industrie spatiale. En particulier, le fluide liquéfié peut-être, mais n'est pas limité à, de l'hydrogène liquide, de l'oxygène liquide, de l'hélium liquide, du méthane liquide ou encore tout ergol (comburant ou carburant) liquide.

Le système comprend une chambre 10 de séparation mécanique. La chambre de séparation mécanique sépare les phases liquide et gazeuse d'un fluide. Dans des exemples, la chambre de séparation est un séparateur statique tourbillonnaire dans lequel une rotation rapide du fluide sépare les phases gazeuse et liquide. Le séparateur statique tourbillonnaire est aussi connu sous le nom de cyclone et utilise la force centrifuge pour une séparation mécanique des particules (la phase liquide) en suspension dans la phase gazeuse du fluide. Sous l'effet de la force centrifuge, les particules liquides se déplacent vers les parois latérales de la chambre de séparation, y perdent leur vitesse par frottement et s'accumulent sur la paroi de la chambre. Les particules liquides initialement accumulées sur les parois latérales de la chambre de séparation sont drainées vers l'une des deux extrémités 40 de la chambre. Ce drainage est notamment créé par la forte mouillabilité du fluide. Le drainage peut également être favorisé par les effets aérodynamiques (écoulement tourbillonnaire de la phase gazeuse disposant d'une composante parallèle à l'axe de symétrie de la chambre de séparation et dirigée vers l'extrémité 40), et, si la forme de la chambre de séparation permet de le générer (par exemple de forme conique) par un gradient de pression vers le bas.

Dans des exemples, la chambre de séparation peut comprendre un corps 12 essentiellement cylindrique car cette forme favorise un mouvement giratoire du fluide en faisant entrer le fluide tangentiellement à la circonférence, au voisinage de la paroi.

Dans des exemples, la chambre de séparation mécanique peut comprendre au moins une section 14 se rétrécissant, c'est-à-dire que la chambre 10 est rendue plus étroite ou encore que les dimensions intérieures de la chambre ont été diminuées. Le rétrécissement d'une partie de la chambre de séparation mécanique induit un gradient de pression qui favorise l'évacuation du liquide séparé en direction du rétrécissement.

Dans des exemples, la section se rétrécissant peut avoir une surface conique. Une surface conique est une surface réglée définie par une droite appelée la génératrice passant par un point fixe S appelé sommet et un point variable décrivant une courbe (c), appelée courbe directrice. La surface conique peut être un cône de révolution. La surface conique peut être un cône de révolution tronqué.

Sur l'exemple de la FIG. 2, le séparateur mécanique est de type cylindroconique dans lequel la chambre 10 comprend une première section 12 (ou partie du corps de la chambre) qui est cylindrique et une deuxième section 14 (ou partie du corps de la chambre) qui a sensiblement la forme d'un cône dont le sommet est tronqué - c'est-à-dire que la partie supérieure du cône a été coupée par un plan 18 (représenté en pointillés) qui peut être sensiblement parallèle à la base du cône-. Le sommet du cône tronqué comprend donc la sortie 40 de la chambre de séparation.

On comprend que l'accumulation de la phase liquide du fluide dans la chambre de séparation dépend en partie de l'aérodynamique se mettant en place pendant l'extraction des phases liquide et gazeuse. Une étude CFD (acronyme de l'anglais « computational fluid dynamics » pouvant être traduit par « mécanique des fluides numérique ») qui se contente de l'écoulement monophasique vapeur peut permettre d'optimiser la forme de la chambre afin de favoriser l'écoulement de la phase liquide. Cet écoulement permet d'entraîner le film liquide le long des parois de la chambre. Notamment, l'accumulation du liquide en partie basse 14, 18, 50 du système 1 est améliorée, et plus particulièrement vers le fond inférieur 59.

Le système comprend une première ouverture 20 (ou orifice) dans la chambre 10 formant une entrée dans cette dernière et permettant l'introduction du fluide dans la chambre. Cette ouverture (ou orifice) est typiquement reliée à une conduite (ou ligne d'alimentation), elle-même reliée au réservoir, via par exemple un orifice de détente, et via laquelle le fluide est amené au système 1. L'ouverture permet l'injection tangentielle dans la chambre de séparation mécanique, ce qui améliore l'effet centrifuge et la séparation des phases liquide et gazeuse. Une ou plusieurs ouvertures peuvent former une entrée. En pratique, avoir une seule ouverture simplifie la construction, et la fiabilité du système puisque, pour une même vitesse d'injection, les risques de fragmentation du liquide en entrée du séparateur sont limités.

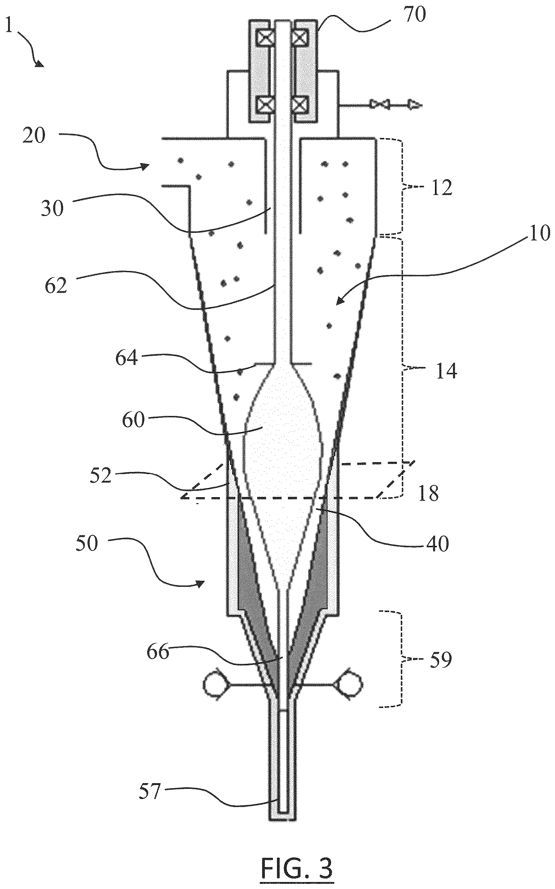

Le système 1 des FIGs. 2 et 3 comporte une ouverture formant une entrée qui est une ouverture permettant une injection tangentielle du fluide. L'entrée est située au niveau d'une extrémité 12 de la chambre afin d'améliorer le rendement de la séparation.

Dans des exemples, le système peut comprendre une première vanne qui est reliée à l'entrée 20. Cette vanne est destinée à contrôler la quantité de fluide (par exemple un volume de fluide par unité de temps) qui est introduite via l'entrée. Ainsi cette première vanne est située sur la conduite (ou ligne d'alimentation) qui amène le fluide du réservoir au système 1. Dans un exemple, la vanne est une vanne TOR (Tout Ou Rien) qui contrôle uniquement l'introduction ou non du fluide dans la chambre de séparation mécanique. La vanne TOR permet donc l'admission ou non du fluide. Le contrôle du débit instantané de la quantité de fluide introduit dans la chambre est alors réalisé par un organe du système. L'organe peut être un orifice calibré.

Dans des exemples, l'organe contrôlant la quantité de fluide destinée à être introduite dans la chambre peut être un organe de détente isenthalpique du fluide. L'organe est aussi appelé l'orifice de Joule-Thomson. Un ensemble vanne/orifice Joule-Thomson est appelé vanne de Joule-Thomson 90 ; la vanne de cet ensemble est typiquement la première vanne qui peut être de type TOR. Le fluide introduit dans la chambre est détendu au travers d'un orifice vanne de Joule-Thomson ou d'une vanne de Joule-Thomson. La détente du fluide cause une production de vapeur et un abaissement de température. Par ailleurs, la vitesse d'écoulement augmente au travers de l'orifice, ce qui favorise l'atomisation de la phase liquide et la production de fines gouttelettes.

Dans des exemples, l'organe de détente isenthalpique peut fonctionner en liquide, l'organe de détente peut être dimensionné pour un fonctionnement en liquide avec équilibre thermodynamique ; la détente du fluide est faible et la section contractée est en écoulement diphasique. L'organe de détente a donc un point de fonctionnement permettant d'éviter que seule la phase liquide du fluide ne pénètre dans le séparateur : un mélange diphasique est généré dans tous les cas.

Le système comprend une deuxième ouverture 30 dans la chambre. Cette deuxième ouverture est un orifice qui permet l'évacuation de la phase gazeuse présente dans la chambre. Cette deuxième ouverture 30 forme ainsi une première sortie dans la chambre de séparation mécanique. La vapeur est ainsi évacuée hors du système à travers cette première sortie.

Dans des exemples, cette première sortie est reliée à une vanne, dite deuxième vanne 82. Cette deuxième vanne contrôle la quantité de gaz (par exemple un volume par unité de temps) évacuée via la première sortie. Dans un exemple, la deuxième vanne est une vanne TOR qui contrôle uniquement la sortie de la phase gazeuse extraite du fluide de la chambre de séparation mécanique : soit la phase gazeuse peut passer, soit elle reste bloquée dans la chambre. La vanne TOR permet donc la sortie ou non du fluide. Le contrôle du débit instantané de la quantité de gaz sortant de la chambre peut être alors réalisé par un organe du système. L'organe peut être ici encore un orifice calibré.

Dans des exemples, l'organe contrôlant la quantité de gaz sortant de la chambre peut être un régulateur de contre pression 80 qui sert à réguler la pression dans la chambre de séparation mécanique. Un ensemble vanne/régulateur de contre pression est appelé vanne de contre pression ; la vanne de cet ensemble est typiquement la deuxième vanne qui est de préférence de type TOR. Quand l'extraction des phases liquide et gazeuse est réalisée, la vapeur est continuellement extraite au travers de l'orifice de réglage de contre pression. Le régulateur de contre pression peut être placé entre la première sortie et la deuxième vanne, c'est-à-dire qu'il est situé sur la conduite reliant la vanne et la première sortie. Alternativement, le régulateur de contre pression peut être uniquement relié à la deuxième vanne, c'est-à-dire qu'il n'est pas situé sur la conduite reliant la deuxième vanne et la première sortie ; en d'autres termes, le régulateur de contre pression est situé en aval de la deuxième vanne.

Le système comprend une troisième ouverture 40 dans la chambre. Cette troisième ouverture est un orifice via lequel la phase liquide qui a été accumulée dans la chambre est évacuée. Cette troisième ouverture 40 forme ainsi une deuxième sortie dans la chambre de séparation mécanique. Le fluide liquide est ainsi évacué hors du système à travers cette deuxième sortie qui peut communiquer avec le réservoir.

Le système comprend un organe de pompage de la phase liquide (accumulée) qui est présente dans la chambre de séparation. L'organe de pompage est en communication avec la deuxième sortie, c'est-à-dire que le liquide accumulé dans la chambre peut être pompé. L'organe de pompage peut être de tout type.

Dans un exemple, la pompe peut être une pompe volumétrique du type pompe piézo-électrique qui comprend une membrane animée par un actionneur d'un mouvement rapide de va-et-vient qui pousse la phase liquide hors de la chambre de séparation.

Dans des exemples, l'organe de pompage peut être une pompe à piston. La pompe à piston comprend au moins un piston 60 dont le déplacement crée une compression dans un corps de pompe 50. Le corps de pompe peut être une partie d'un volume de la chambre de séparation. De préférence, le piston coulisse de manière étanche avec le corps de pompe. Le corps de pompe communique avec la deuxième sortie afin de permettre une expulsion du liquide qui a été accumulé.

Dans des exemples, le corps de pompe 50 peut être situé au niveau de la section 14 se rétrécissant. L'accumulation de la phase liquide est favorisée par le rétrécissement de la chambre et le corps de pompe va accumuler plus facilement la phase liquide destinée à être pompée hors du système. La deuxième sortie 40 de la chambre de séparation mécanique vient au contact d'une ouverture du corps de pompe par laquelle le piston pénètre le corps de pompe. Dans un exemple, le corps de pompe accueille la chambre de séparation mécanique, c'est-à-dire que le corps de pompe est extérieur à la chambre. Alternativement, la chambre de séparation mécanique accueille le corps de pompe qui est alors situé à l'intérieur de la chambre. Dans ces deux exemples, l'élément accueillant et/ou l'élément accueilli est(sont) de préférence agencé(s) de manière à favoriser l'étanchéité du contact entre eux.

Dans l'exemple de la FIG. 2, le corps de pompe 50 est situé sur le bas de la partie conique 14, c'est-à-dire au niveau de la sortie 18 avec laquelle il communique. Le corps de pompe 50 accueille la chambre 10 et un contact étanche est de préférence formé entre eux. Dans cet exemple, la partie 52 du corps de pompe 50 est en contact avec l'ouverture 18 de la partie rétrécie 14 de la chambre 10 ; la partie 52 présente donc une surface conique qui correspond à la surface conique de la partie rétrécie 14. La chambre 10 et le corps de pompe 50 peuvent être encastrés. Le contact physique entre la chambre 10 et le corps de pompe est maintenu à l'aide de tout moyen destiné à maintenir un contact physique entre eux, par exemples par colle, adhésif, clipsage, vissage,.... Le contact peut être direct, par exemple dans le cas d'un encastrement. Le contact peut être indirect si un ou plusieurs éléments améliorant l'étanchéité et/ou le contact physique sont situés au niveau des points de contact de la chambre et du corps de pompe ; par exemple si un ou plusieurs joints d'étanchéité sont placés entre la chambre et le corps de pompe.

Dans des exemples, la partie du corps de pompe accueillant le piston a une surface cylindrique, c'est-à-dire une forme cylindrique. La surface cylindrique peut typiquement former un cylindre circulaire droit. Le piston comprend donc au moins une section (par exemple de de forme circulaire) qui vient au contact du cylindre afin que le déplacement du piston entraîne une variation et une compression du volume du corps de pompe. Toute forme complémentaire à celle du piston et permettant un contact direct entre le piston et le corps de pompe peut être envisagée. Le contact entre le piston et le corps de pompe peut être rendu étanche grâce par exemple à l'aide d'un ou plusieurs joints toriques disposés sur le piston ou encore un joint à lèvre disposé en entrée du corps de pompe. Le seul contact entre le piston et le corps de pompe peut créer une étanchéité suffisante.

La FIG. 2 illustre un exemple de configuration dans laquelle une partie du corps de pompe est de forme cylindrique et le contact entre le piston 60 et le corps de pompe 50 est indirect. Le contact indirect est réalisé à l'aide d'un ensemble comprenant un obturateur 54 et un soufflet d'étanchéité 56 qui est compris dans le corps de pompe 50. L'obturateur et le soufflet forment un ensemble étanche de sorte que la phase liquide accumulée dans la chambre ne peut pas pénétrer dans l'espace 58 qui est défini par la surface interne (cylindrique) du corps de pompe et la surface externe de l'ensemble obturateur/soufflet. L'obturateur couronne le soufflet d'étanchéité. En cours de descente, le piston vient se loger contre l'obturateur 54 faisant office de joint d'étanchéité entre la chambre de séparation 10 et le corps de pompe 50. Le soufflet est comprimé au fur et à mesure que le piston descend.

La FIG. 3 est similaire à la FIG. 2, à l'exception que le contact entre le piston 60 et le corps de pompe 50 est direct. Le corps de pompe est dépourvu de l'obturateur et du soufflet d'étanchéité. Une configuration dans laquelle il y a un contact direct entre le piston et le corps de pompe améliore la fiabilité e de l'organe de pompage de la phase liquide, notamment parce que l'étanchéité du corps de pompe peut être réalisée à l'aide de joints dont l'évolution des caractéristiques physiques dans le temps, notamment la résistance à des fluides très froids, est connue.

Dans les exemples, le corps de pompe comprend, en plus de l'ouverture par laquelle pénètre le piston, une ou plusieurs ouvertures par lesquelles le liquide pompé est évacué. Chaque ouverture peut comprendre un clapet anti-retour qui impose la circulation du fluide dans un seul sens ; par exemple pour une conduite qui conduit le fluide de l'ouverture du corps de pompe vers un réservoir stockant le fluide. La réinjection du liquide refroidi par le système vers le réservoir se fait donc à travers un ou plusieurs clapets anti-retours qui permettent d'éviter l'admission directe de liquide dans la chambre cyclonique 10 sans passage par l'entrée 20.

Dans des exemples, la partie frontale du piston peut avoir une forme permettant à ce dernier de pénétrer dans le corps de pompe avant qu'il y ait contact étanche entre le piston et le corps de pompe. La partie frontale du piston est la partie du piston qui est en contact avec la phase liquide (et possiblement gazeuse) présente dans le corps de pompe. Une telle forme permet de repousser la vapeur hors du corps de pompe avant qu'il y ait un commencement d'évacuation du fluide présent dans le corps de pompe, c'est-à-dire avant que la compression ne soit créée. C'est par exemple le cas lorsque le piston a une forme d'ogive, c'est-à-dire une forme dans laquelle des arcs se rejoignent en sommet. De préférence, la partie frontale à une forme convexe, évitant ainsi que le piston puisse piéger de la vapeur dans le corps de pompe. Dans un exemple, la partie frontale du piston peut avoir une surface conique. Dans un autre exemple, la surface conique est un cône de révolution qui peut être tronqué.

Dans des exemples, le corps de pompe peut avoir un fond inférieur qui possède une géométrie qui est complémentaire à la géométrie du piston, notamment à la partie frontale du piston. Le fond inférieur est la partie du corps de pompe qui fait face au piston. Les géométries étant complémentaires, la partie frontale du piston peut pénétrer dans le fond intérieur du corps de pompe. Le fond inférieur comprend lesdites une ou plusieurs ouvertures par lesquelles le liquide pompé est poussé hors du corps de pompe.

Dans les exemples des FIGs. 2 et 3, le fond inférieur 59 est un cône de révolution qui a un angle d'ouverture supérieur à celui du piston 60, de sorte que lorsque le piston descend, la géométrie séparant le fond inférieur 59 du corps de pompe et la partie frontale du piston soit convergente vers le bas. La vapeur est repoussée vers le haut et du liquide pur est poussé vers la sortie en bas, par effet capillaire.

Dans des exemples, le corps de pompe peut comprendre un ou plusieurs pièges capillaires pour retenir dans le corps de pompe la phase liquide accumulée qui pourrait sortir du corps de pompe lors de la descente du piston. Les pièges capillaires peuvent comprendre des plaques verticales qui garnissent la chambre de pompe. Dans un exemple où la chambre de pompe comprend un fond inférieur 59 qui n'est pas plan, par exemple le fond inférieur 59 est un cône de révolution, les pièges capillaires sont disposés dans le fond inférieur.

Dans des exemples, le piston 60 peut être relié à un actionneur 70. L'actionneur peut être situé en dehors de la chambre de séparation mécanique afin de ne pas perturber la séparation des phases et de faciliter la construction du système. Dans un exemple, le piston comprend une tige 62 qui est reliée à l'actionneur. Le piston peut en outre comprendre une deuxième tige 66 qui s'étend en partant de la partie frontale du piston et qui peut coulisser dans un trou fermé 57 situé sur le fond inférieur 59. La deuxième tige peut coulisser de manière étanche avec le trou fermé et au moins une partie de la deuxième tige est en permanence dans le trou fermé. Dans ce cas, le cylindre 57 accueillant la tige peut être un trou ouvert (et non plus fermé) afin de permettre l'évacuation de gaz qui serait piégé dans le trou lors de l'assemblage du système. La deuxième tige améliore le positionnement et le guidage du piston qui n'est plus à la seule charge de l'actionneur. De plus, la longueur de cette deuxième tige peut être choisie de telle sorte que le piston ne puisse pas être en contact direct avec le fond inférieur 59 du corps de pompe 50.

Dans des exemples, la tige du piston peut comprendre une collerette 64 pour éviter que le liquide resté piégé dans la chambre de séparation - par exemple qui ne s'est pas accumulé dans le corps de pompe - ne remonte par capillarité le long de la tige du piston vers la sortie vapeur 30.

Dans des exemples, la chambre et le corps de pompe peuvent constituer un seul élément, fabriqué par exemple par injection de matière plastique. La chambre et le corps de pompe peuvent être en métal, notamment ceux utilisés dans l'industrie spatiale tels que l'aluminium, l'inox, le titane. Le piston peut être fabriqué avec un matériau polymère tel que par exemple le polytétrafluoroéthylène (PTFE), ou encore en tout matériau présentant une excellente résistance thermique et chimique à des fluides liquéfiés. Le matériau peut présenter un coefficient de frottement extrêmement faible.

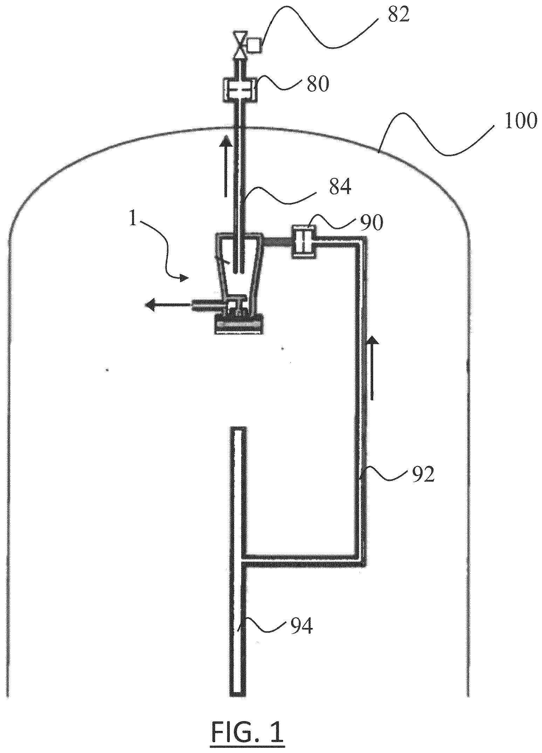

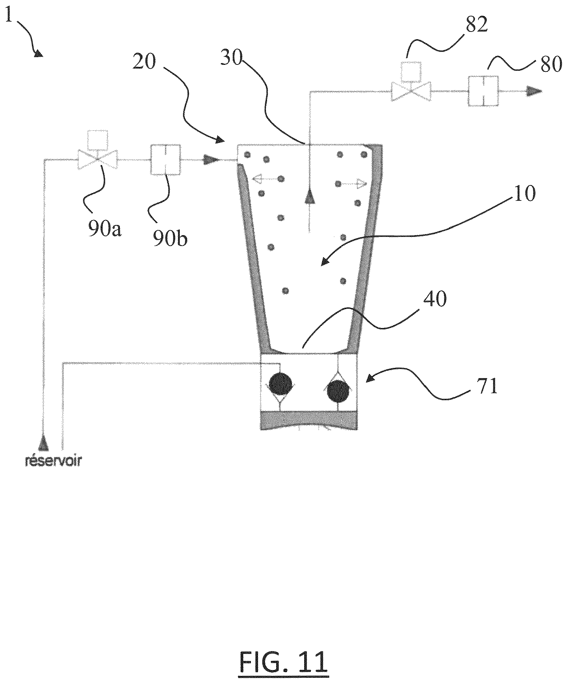

La FIG. 11 est un exemple d'un système similaire à ceux des figures 2 et 3. Dans cet exemple, l'organe de pompage est une pompe 71. Dans Le système de la FIG. 1 comprend également un organe de détente isenthalpique 90a du fluide et une vanne TOR 90b pour contrôler le débit de fluide pénétrant dans la chambre 10. Le système comprend également un régulateur de contre-pression 80 et une vanne TOR 82 pour contrôler le débit de gaz extrait sortant.

Plusieurs des exemples précédemment discutés peuvent être combinés entre eux.

La FIG. 1 est un schéma illustrant un exemple d'utilisation et d'intégration du système de régulation de la pression d'un réservoir discuté précédemment. Le système peut être l'un quelconque des exemples de systèmes discuté. Dans cet exemple de la FIG. 1, le système 1 est situé à l'intérieur d'un réservoir 100 qui stocke le fluide avec une pression de 3 bar et une température de 25 kelvin. Une ligne de prélèvement de fluide 92 relie le réservoir à l'entrée 20 du système 1. La ligne de prélèvement peut être reliée à un collecteur central 94 qui est situé sensiblement au centre du réservoir. Le conduit 92 comprend une vanne TOR de Joule-Thomson 90 qui détend le fluide prélevé et l'atomise en gouttelettes. Le système comprend une ligne d'extraction 84 connectée à la première sortie 30 et qui évacue la phase gazeuse du fluide introduit dans le séparateur mécanique en dehors du système. La vapeur ainsi évacuée est rejetée à l'extérieur du réservoir. La ligne d'extraction 84 comprend un régulateur de contre-pression 80, ainsi qu'une vanne 82 du type TOR. Le système 1 comprend en outre une ligne de réinjection dans le réservoir du liquide qu'il a extrait et pompé. On comprend que le système peut aussi bien être situé à l'extérieur qu'à l'intérieur du réservoir. De préférence, le système est situé à l'intérieur du réservoir pour que le froid généré par le système puisse profiter au fluide contenu dans le réservoir. Lorsque le système est situé à l'extérieur du réservoir, les actionneurs du système (par exemple la pompe) et les vannes sont situés également à l'extérieur, ce qui évite que la chaleur qu'ils dissipent ne soit transmise au fluide.

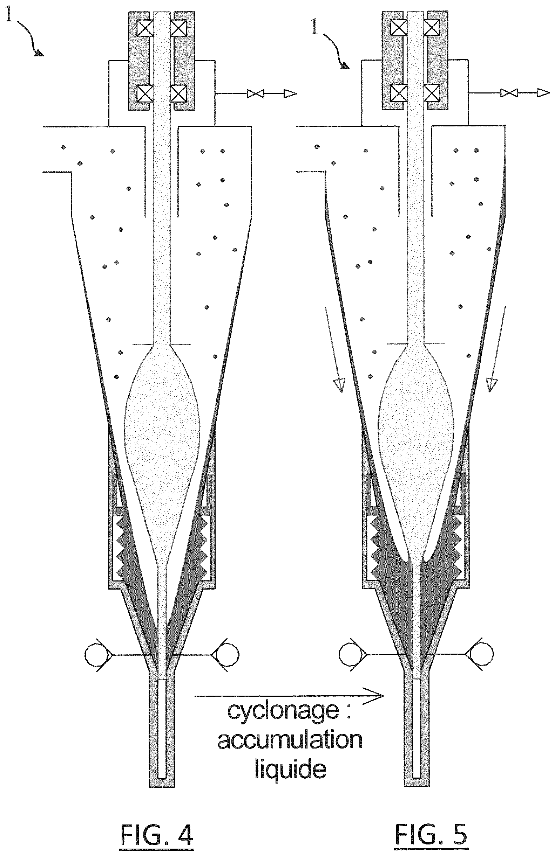

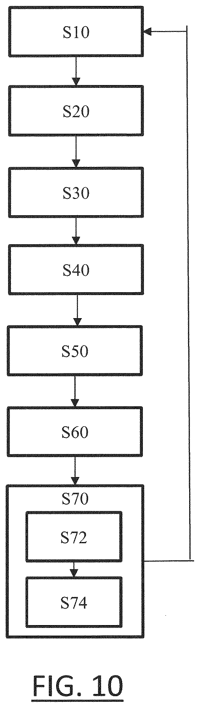

Les FIGs. 4 à 9 illustrent un exemple d'un procédé de régulation de la pression d'un réservoir de fluide liquéfié, par exemple le réservoir discuté en référence à la FIG. 1 régulé par le système représenté à la FIG. 2. Le procédé est schématisé sur la FIG. 10.

La FIGs. 4 et 5 montrent un exemple d'une étape d'extraction qui intervient typiquement après qu'on ait déterminé (étape S10) que la pression présente dans le réservoir dépasse un seuil prédéterminé et qu'il faut donc la diminuer.

Après l'étape S10, la première vanne 90 et la deuxième vanne 82 sont ouvertes (étape S20), de sorte que du fluide est prélevé dans le réservoir et est détendu au travers d'un orifice ou d'une vanne de Joule-Thomson. La première vanne peut être ouverte avant la deuxième, ou inversement, ou encore elles sont ouvertes en même temps. Cette détente se traduit par une production de vapeur et par un abaissement de température. La vitesse d'écoulement augmente au travers de l'orifice, ce qui favorise l'atomisation de la phase liquide et la production de fines gouttelettes.

Le liquide résiduel contenu dans la vapeur après détente est séparé au sein d'un séparateur cyclonique. Durant cette phase de séparation (cyclonage), le liquide est progressivement accumulé en paroi du séparateur, sous l'effet de l'accélération centrifuge induite par l'écoulement cyclonique, tandis que la vapeur est continument extraite au travers de l'orifice de réglage de contrepression. Du fait de la forme conique de la chambre de séparation, un gradient de pression du bas vers le haut repousse le liquide vers la chambre de pompage en bas. La FIG. 5 illustre l'accumulation de la phase liquide extraite du fluide qui fait suite à la situation de départ (étape S20) illustrée à la FIG. 4.

On détermine ensuite (étape S30) que la phase liquide du fluide ayant été extraite doit être pompée. Dans un exemple, la détermination peut être réalisée à l'aide d'un détecteur de niveau de liquide dans la chambre. Dans un autre exemple, la détermination peut être réalisée à l'expiration d'une durée prédéterminée t₁ qui commence à l'ouverture des deux vannes. Cette durée t₁ peut correspondre au temps requis pour accumuler un volume maximal de liquide dans la chambre de séparation qui nécessite d'être pompé ; ce temps est calculé pour un pire cas qui est celui où seul du fluide en phase liquide pénètre dans le système - il n'y a donc pas de vapeur en entrée (amont de l'orifice JT) -.

Après avoir déterminé que la phase liquide du fluide accumulée doit être pompée, la deuxième vanne est fermée (étape S40) afin d'augmenter la pression dans la chambre de séparation. L'augmentation de la pression dans la chambre permet de diminuer la force que devra appliquer l'actionneur sur le piston pour que ce dernier descende.

Ensuite, on détermine (étape S50) que la pression dans la chambre est suffisamment importante pour commencer la descente du piston. Dans un exemple, un détecteur de pression peut être utilisé pour mesurer la pression. Dans un autre exemple, la détermination peut correspondre à l'expiration d'une durée prédéterminée t₂ qui commence à la fermeture de la deuxième vanne.

Après avoir déterminé que la pression dans la chambre est suffisante, la première vanne est à son tour fermée (étape S60).

Ensuite, l'organe de pompage de la phase liquide est actionné (étape S70).

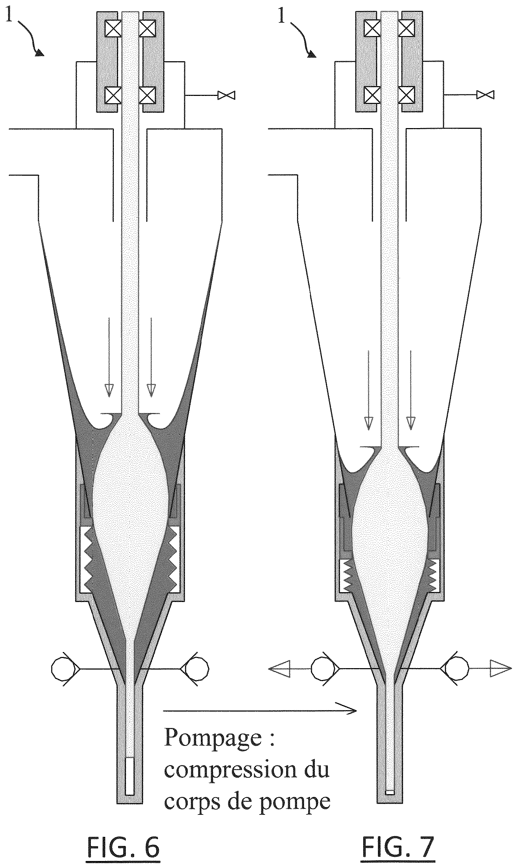

Le piston commence (étape S72) tout d'abord sa descente en direction du corps de pompe afin d'expulser le liquide accumulé. En cours de descente, l'ogive du piston vient se loger contre un obturateur faisant office de joint d'étanchéité entre la chambre de séparation et le corps de pompe, comme illustré sur la FIG. 6. A partir de ce moment, la descente du piston se traduit par la compression du volume de la chambre de pompage, au fur et à mesure que le piston comprime le soufflet d'étanchéité de cette chambre, en appuyant sur l'obturateur qui le couronne. La pression augmentant dans le corps de pompe, la vapeur présente se condense, et sera donc évacuée à son tour.

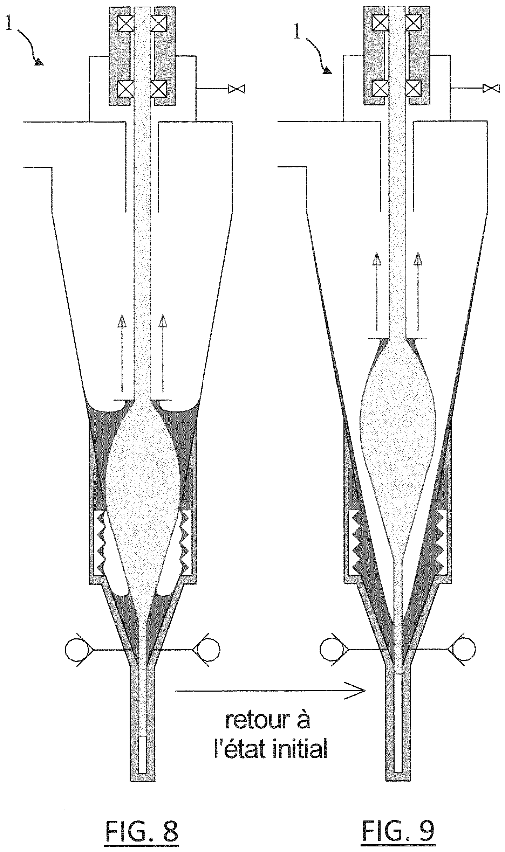

La FIG. 7 illustre la situation dans laquelle le piston a atteint sa position limite dans le corps de pompe. A ce moment, l'actionneur commence la remontée (étape S74), comme illustré sur la FIG. 8. La remontée a pour conséquence que le liquide restant dans le corps de pompe est détendu et se vaporise. Cette vaporisation ne constitue cependant pas une perte puisque la masse évaporée correspond environ à celle qui a été condensée lors de la compression. Le liquide qui était resté piégé dans la chambre de séparation ne remonte pas par capillarité le long de la tige du piston grâce à la collerette placée sur la tige, comme illustré sur la FIG. 9. Les vannes restent fermées lors de la remontée afin de limiter les pertes de liquide (sa vaporisation) encore présent dans la chambre.

Le système est désormais retourné à son état initial illustré sur la FIG. 4. L'organe de pompage est à l'arrêt. Les vannes peuvent être à nouveau ouvertes et les étapes S10 à S74 sont alors répétées.

L'actionneur et les vannes peuvent être commandés par une unité de commande. Cette unité peut notamment envoyer des signaux de commandes à l'actionneur et aux vannes. L'unité peut également mesurer les durées t₁ et t₂ des étapes S30 et S50, ou encore recevoir des informations transmises par des capteurs, sondes, ou détecteurs de niveau d'un liquide et de pression.

## Revendications

1. Système (1) de régulation de la pression pour réservoir de fluide liquéfié,
comprenant :
- une chambre (10, 12, 14) de séparation mécanique des phases liquide et gazeuse du fluide, la chambre de séparation étant un séparateur cyclonique ;
- une première ouverture (20) dans la chambre formant une entrée via laquelle le fluide est introduit du réservoir dans la chambre, lorsque le système est monté avec le réservoir ;
- une deuxième ouverture (30) dans la chambre formant une première sortie permettant l'évacuation de la phase gazeuse de la chambre à l'extérieur du réservoir, lorsque le système est monté avec le réservoir ;
- une troisième ouverture (40) dans la chambre formant une deuxième sortie via laquelle la phase liquide de la chambre est évacuée et réinjectée dans le réservoir, lorsque le système est monté avec le réservoir ;
- un organe de pompage (50, 60) de la phase liquide communiquant avec la deuxième sortie ;
- une première vanne reliée à l'entrée et contrôlant une quantité de fluide introduit via l'entrée.

2. Système selon la revendication 1, dans lequel l'organe de pompage est une pompe à piston comprenant au moins un piston (60) dont le déplacement crée une compression dans un corps de pompe (50) cylindrique en communication avec la deuxième sortie ;
dans lequel le corps de pompe comprend un fond inférieur qui possède une géométrie qui est complémentaire à la géométrie du piston, le fond inférieur comprenant une ou plusieurs ouvertures par lesquelles le liquide extrait est pompé hors du corps de pompe ;
dans lequel ledit au moins un piston de la pompe comprend une tige (62) sur laquelle est placée une collerette (64) ;
dans lequel la tige est reliée à un actionneur (70) situé en dehors de la chambre de séparation mécanique.

3. Système selon la revendication 2, dans lequel la chambre de séparation mécanique comprend au moins une section (14) se rétrécissant, de préférence la section se rétrécissant a une surface conique et le sommet de la surface conique (18) comprend la deuxième sortie (40) qui est en contact avec le corps de pompe.

4. Système selon la revendication 3, dans lequel les surfaces internes de la section se rétrécissant (14) et du corps de la pompe forment un cône de révolution.

5. Système selon l'une des revendication 2 à 4, dans lequel le piston comprend une partie frontale qui a une forme d'ogive ou une surface conique, la partie frontale pouvant pénétrer dans le corps de pompe sans créer une compression dans le corps de pompe.

6. Système selon l'une des revendications 1 à 5, comprenant en outre :
- une deuxième vanne reliée à la première sortie et contrôlant une quantité de la phase gazeuse du fluide évacué via la première sortie.

7. Système selon la revendication 6, dans lequel la première vanne et/ou la deuxième vanne sont des vannes du type tout ou rien.

8. Système selon l'une des revendications 6 à 7, comprenant en outre un organe de régulation de contre-pression communiquant avec la première sortie et avec la deuxième vanne, ou avec la deuxième vanne uniquement.

9. Système selon l'une des revendications 1 à 8, comprenant en outre un organe de détente isenthalpique du fluide destiné à être introduit dans la chambre.

10. Système selon l'une des revendications 2 à 9, dans lequel le corps de pompe comprend un ou plusieurs pièges capillaires.

11. Réservoir de fluide liquéfié comprenant un système de régulation de la pression selon l'une des revendications 1 à 10, dans lequel l'entrée et la deuxième sortie du système communiquent avec le réservoir.

12. Procédé de régulation de la pression d'un réservoir de fluide liquéfié le réservoir comprenant le système selon l'une des revendications 6 à 10, comprenant les étapes consistant à :
- déterminer (S10) que la pression du réservoir dépasse un seuil ;
- ouvrir (S20) la première vanne et la deuxième vanne ;
- déterminer (S30) que la phase liquide du fluide ayant été séparée dans la chambre de séparation doit être pompée ;
- fermer (S40) la deuxième vanne afin d'augmenter la pression dans la chambre de séparation ;
- fermer (S60) la première vanne ;
- actionner (S70) l'organe de pompage de la phase liquide.

## Patentansprüche

1. System (1) zur Druckregulierung für einen Behälter von verflüssigtem Fluid, umfassend:
- eine Kammer (10, 12, 14) zur mechanischen Abscheidung der flüssigen und gasförmigen Phase des Fluids, wobei die Abscheidungskammer ein Zyklonabscheider ist;
- eine erste Öffnung (20) in der Kammer, die einen Eingang bildet, über den das Fluid vom Behälter in die Kammer eingeführt wird, wenn das System mit dem Behälter montiert ist;
- eine zweite Öffnung (30) in der Kammer, die einen ersten Ausgang bildet, die die Ableitung der gasförmigen Phase der Kammer auf die Außenseite des Behälters ermöglicht, wenn das System mit dem Behälter montiert ist;
- eine dritte Öffnung (40) in der Kammer, die einen zweiten Ausgang bildet, über den die flüssige Phase der Kammer abgeleitet und erneut in den Behälter injiziert wird, wenn das System mit dem Behälter montiert ist;
- ein Pumporgan (50, 60) der flüssigen Phase, das mit dem zweiten Ausgang kommuniziert;
- ein erstes Ventil, das mit dem Eingang verbunden ist und eine Menge an Fluid, die über den Eingang eingeführt wird, steuert.

2. System nach Anspruch 1, wobei das Pumporgan eine Kolbenpumpe ist, umfassend mindestens einen Kolben (60), dessen Verschiebung eine Verdichtung in einem zylindrischen Pumpenkörper (50) erzeugt, der in Kommunikation mit dem zweiten Ausgang ist;
wobei der Pumpenkörper einen unteren Boden umfasst, der eine Geometrie aufweist, die komplementär zur Geometrie des Kolbens ist, wobei der untere Boden eine oder mehrere Öffnungen umfasst, durch die extrahierte Flüssigkeit auf die Außenseite des Pumpenkörpers gepumpt wird;
wobei der mindestens eine Kolben der Pumpe einen Schaft (62) umfasst, auf dem ein Flansch (64) platziert ist,
wobei der Schaft mit einer Betätigungsvorrichtung (70) verbunden ist, die sich außerhalb der mechanischen Abscheidekammer befindet.

3. System nach Anspruch 2, wobei die mechanische Abscheidekammer mindestens einen Abschnitt (14) umfasst, der sich verengt, vorzugsweise wobei sich der Abschnitt, der sich verengt, eine konische Fläche aufweist, und die Spitze der konischen Fläche (18) den zweiten Ausgang (40) umfasst, der mit dem Pumpenkörper in Kontakt ist.

4. System nach Anspruch 3, wobei die Innenflächen des Abschnitts, der sich verengt (14), und des Körpers der Pumpe einen Drehkegel bilden.

5. System nach einem der Ansprüche 2 bis 4, wobei der Kolben einen frontalen Teil umfasst, der die Form eines Spitzbogens oder einer konische Fläche aufweist, wobei der frontale Teil in den Pumpenkörper eindringen kann, ohne eine Verdichtung im Pumpenkörper zu erzeugen.

6. System nach einem der Ansprüche 1 bis 5, umfassend außerdem:
- ein zweites Ventil, das mit dem ersten Ausgang verbunden ist und eine Menge der gasförmigen Phase des über den ersten Ausgang abgeleiteten Fluids steuert.

7. System nach Anspruch 6, wobei das erste Ventil und/oder das zweite Ventil Ventile vom Typ Auf-Zu sind.

8. System nach einem der Ansprüche 6 bis 7, umfassend außerdem ein Organ zur Gegendruckregulierung, das mit dem ersten Ausgang und mit dem zweiten Ventil oder nur mit dem zweiten Ventil kommuniziert.

9. System nach einem der Ansprüche 1 bis 8, umfassend außerdem ein Organ zur isenthalpen Expansion des Fluids, das ausgelegt ist, um in die Kammer eingeführt zu werden.

10. System nach einem der Ansprüche 2 bis 9, wobei der Pumpenkörper eine oder mehrere Kapillarfallen umfasst.

11. Behälter von verflüssigtem Fluid, umfassend ein System zur Druckregulierung nach einem der Ansprüche 1 bis 10, wobei der Eingang und der zweite Ausgang des Systems mit dem Behälter kommunizieren.

12. Verfahren zur Druckregulierung eines Behälters von verflüssigtem Fluid, wobei der Behälter das System nach einem der Ansprüche 6 bis 10 umfasst, umfassend die Schritte, bestehend aus:
- Bestimmen (S10), dass der Druck des Behälters einen Schwellenwert übersteigt;
- Öffnen (S20) des ersten Ventils und des zweiten Ventils;
- Bestimmen (S30), dass die flüssige Phase des Fluids, die in der Abscheidekammer abgeschieden wurde, gepumpt werden muss;
- Schließen (S40) des zweiten Ventils, um den Druck in der Druckkammer zu erhöhen;
- Schließen (S60) des ersten Ventils;
- Betätigen (S70) des Pumporgans der flüssigen Phase.

## Claims

1. A pressure control system (1) for a liquefied fluid tank, comprising:
- a chamber (10, 12, 14) for mechanical separation of the liquid and gaseous phases of the fluid, the separating chamber being a cyclone separator;
- a first opening (20) in the chamber forming an inlet through which the fluid is introduced from the tank into the chamber, when the system is mounted with the tank;
- a second opening (30) in the chamber forming a first outlet allowing the discharge of the gaseous phase from the chamber to the outside of the tank, when the system is mounted with the tank;
- a third opening (40) in the chamber forming a second outlet through which the liquid phase of the chamber is discharged and reinjected into the tank, when the system is mounted with the tank;
- a pumping member (50, 60) for pumping the liquid phase communicating with the second outlet;
- a first valve connected to the inlet and controlling a quantity of fluid introduced via the inlet.

2. The system according to claim 1, wherein the pumping member is a piston pump comprising at least one piston (60) whereof the movement creates a compression in a cylindrical pump body (50) in communication with the second outlet;
wherein the pump body comprises a lower bottom that has a geometry which is complementary to the geometry of the piston, the lower bottom comprising one or several openings through which the extracted liquid is pumped outside the pump body;
wherein said at least one piston of the pump comprises a rod (62) on which a flange (64) is placed;
wherein the rod is linked to an actuator (70) situated outside the mechanical separation chamber.

3. The system according to claim 2, wherein the mechanical separation chamber comprises at least one section (14) which narrows, the narrowing section preferably having a conical surface and the apex of the conical surface (18) comprises the second outlet (40) which is in contact with the pump body.

4. The system according to claim 3, wherein the inner surfaces of the narrowing section (14) and the body of the pump form a cone of revolution.

5. The system according to one of claims 2 to 4, wherein the piston comprises a front part which has an ogive shape or a conical surface, the front part being able to penetrate the pump body without creating a compression in the pump body.

6. The system according to one of claims 1 to 5, further comprising:
- a second valve connected to the first outlet and controlling a quantity of the gaseous phase of the fluid discharged through the first outlet.

7. The system according to claim 6, wherein the first valve and/or the second valve are valves of the all-or-nothing type.

8. The system according to one of claims 6 to 7, further comprising a back pressure control member communicating with the first outlet and with the second valve, or with the second valve only.

9. The system according to one of claims 1 to 8, further comprising an isenthalpic expansion member for the fluid intended to be introduced into the chamber.

10. The system according to one of claims 2 to 9, wherein the pump body comprises one or several capillary traps.

11. A liquefied fluid tank comprising a pressure control system according to one of claims 1 to 10, wherein the inlet and the second outlet of the system communicate with the tank.

12. A method for controlling the pressure of a liquefied fluid tank, the tank comprising the system according to one of claims 6 to 10, comprising the steps consisting in:
- determining (S10) that the pressure of the tank exceeds a threshold;
- opening (S20) the first valve and the second valve;
- determining (S30) that the liquid phase of the fluid having been separated in the separation chamber must be pumped;
- closing (S40) the second valve so as to increase the pressure in the separation chamber;
- closing (S60) the first valve;
- actuating (S70) the pumping member for pumping the liquid phase.
